# FASCICULE DE BREVET EUROPEEN

(11) **EP 0 753 250 B1**
(45) Date de publication et mention de la délivrance du brevet: **06.05.1999**
(21) Numéro de dépôt: 96401513.5
(22) Date de dépôt: 10.07.1996
(51) Int. Cl.: A01K 7/02

(54) **Abreuvoir isotherme pour animaux**
Isotherme Viehtränke
Isothermal drinker for animal

(30) Priorité: 12.07.1995 FR 9508419
(43) Date de publication de la demande: 15.01.1997
(73) Titulaire: LA BUVETTE, 08090 Charleville Mezieres (FR)
(72) Inventeur: Gustin, Jean-Pierre, 08000 Charleville Mézières (FR)
(74) Mandataire: Laget, Jean-Loup

(56) Documents cités:
- US-A- 4 100 885
- RITCHIE INDUSTRIES: "Sales Pamphlet 1992-1993" 1 Janvier 1992 , RITCHIE INDUSTRIES , CONRAD, IOWA, USA. XP000319587 * page 6 *

## Description

La présente invention concerne un abreuvoir isotherme pour animaux. On entend par ce terme un abreuvoir constitué par un récipient isolé thermiquement, alimenté par une robinetterie à flotteur, qui maintient un volume constant d'eau dans le récipient, lequel comprend à sa partie supérieure une ou plusieurs ouvertures de faibles dimensions permettant à un animal d'atteindre l'eau se trouvant dans le récipient.

Un tel abreuvoir est destiné à être placé à l'extérieur et est donc soumis, en particulier en hiver, aux intempéries, notamment aux basses températures.

C'est la raison pour laquelle un tel abreuvoir est isolé thermiquement et comporte des ouvertures aussi petites que possible permettant aux animaux d'atteindre l'eau (compte tenu de l'anatomie des animaux auxquels cet abreuvoir est destiné), ce qui rend très difficile l'accès aux mécanismes de robinetterie ainsi que le nettoyage de l'intérieur du récipient : alors qu'un tel nettoyage doit pouvoir être réalisé fréquemment pour des raisons d'hygiène sanitaire.

Parmi les abreuvoirs de l'art antérieur, celui décrit dans US-A-4100885 comporte deux parties : une partie inférieure constituant la cuve proprement dite, et une partie supérieure formant couvercle et occupant toute la face supérieure de la cuve, reliées par des boulons ou des vis. Les abreuvoirs décrits dans le catalogue de Ritchie Industries 〈〈 Sales Pamphlet 1992-1993 〉〉, présentent une partie supérieure formée de plusieurs éléments séparés (un couvercle horizontal et des battants inclinés) fixés au corps de la cuve par des vis et des boulons.

La présente invention concerne un abreuvoir pour animaux constitué en deux parties : une partie inférieure constituant la cuve proprement dite et une partie supérieure formant couvercle et occupant toute la face supérieure de la cuve caractérisé par le fait que les deux parties sont reliées l'une à l'autre par des moyens d'attache rapide disposés autour du rebord supérieur de la cuve; de telle sorte que les deux parties puissent être facilement détachées l'une de l'autre afin de permettre le nettoyage de ces deux parties.

Selon un premier mode de réalisation, les moyens d'attache rapide sont disposés tout autour du rebord supérieur de la cuve de sorte que la partie supérieure peut être entièrement détachée de la partie inférieure.

Selon un deuxième mode de réalisation, la partie supérieure formant couvercle est articulée par une charnière à la partie inférieure et comporte des moyens de fermeture de sorte que le couvercle peut être pivoté pour ouvrir l'abreuvoir de façon analogue à une valise.

A titre d'exemple non limitatif et pour faciliter la compréhension de l'invention, on a représenté aux dessins annexés :
Figure 1, une vue d'ensemble en perspective d'un mode de réalisation de l'invention ;
Figures 2 et 3 deux exemples de systèmes d'attache rapide.

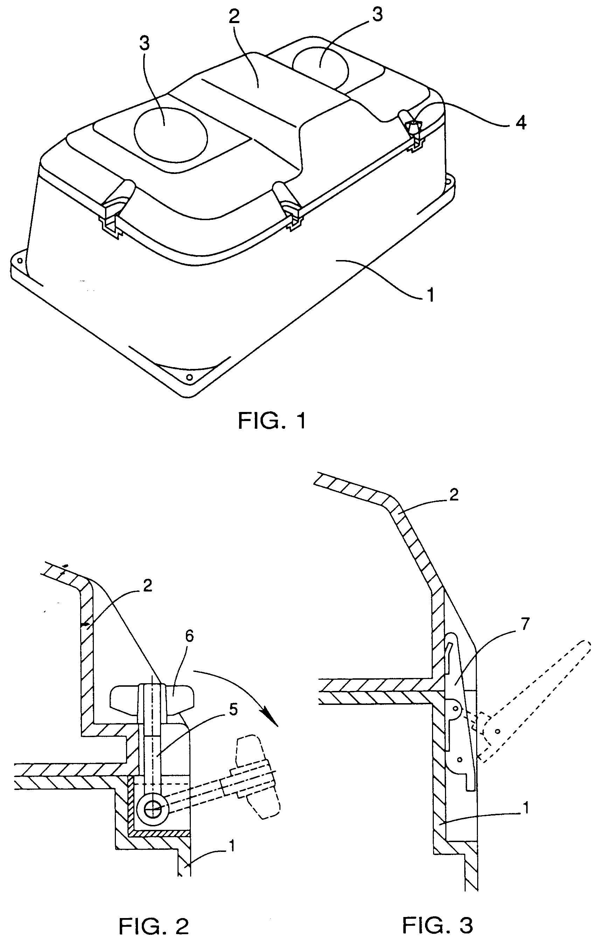

En se reportant à ces figures, et plus particulièrement à la figure 1, on voit que l'abreuvoir selon l'invention est en deux parties 1 et 2 ; la partie inférieure 1 constituant la cuve contenant l'eau et la partie 2 constituant le couvercle. Ce couvercle 2 occupe toute la face supérieure de la cuve 1. Il comporte, comme cela est connu, une ou plusieurs ouvertures 3 (au nombre de deux dans l'exemple représenté) par lesquelles les animaux peuvent introduire leur museau pour boire l'eau qui se trouve dans la cuve 1. Cette cuve 1 est alimentée en eau par une robinetterie qui maintient l'eau à un niveau constant. Ce système de robinetterie à niveau constant est connu en soi, ne fait pas partie de l'invention et n'est donc pas représenté.

Dans l'exemple représenté à la figure 1, le couvercle 2 est entièrement détachable de la cuve 1 et est fixé à cette dernière par une pluralité d'attaches rapides 4.

Ces attaches rapides 4 peuvent être constituées, comme représenté à la figure 2, par des tiges filetées basculantes 5 sur lesquelles se vissent des écrous à papillon 6. Elles peuvent aussi être constituées, comme représenté à la figure 3, par une fixation à grenouillère 7.

Selon un autre mode de réalisation, non représenté, le couvercle 2 n'est pas entièrement détachable de la cuve 1, mais est articulé à celle-ci au moyen d'une charnière de la même façon qu'un couvercle de valise est articulé au corps de la valise. Dans ce cas, la fermeture du couvercle 2 sur la cuve 1 peut avantageusement se faire au moyen des mécanismes illustrés aux figures 2 et 3.

L'abreuvoir selon la présente invention a pour avantage de permettre un accès facile à la robinetterie pour l'entretien ou la réparation de celle-ci et un nettoyage facile des parois intérieures de la cuve 1 et du couvercle 2.

Cette disposition est particulièrement avantageuse pour les abreuvoirs isolés thermiquement pour pouvoir être soumis aux imtempéries mais elle n'est évidemment pas limitée à ce type particulier d'abreuvoir : elle convient à tout abreuvoirs du type fermé qu'ils soient ou non isolés thermiquement.

D'autre part, l'invention n'est pas limitée au cas où la cuve 1 est parallélépipédique et le couvercle 2 rectangulaire ; la cuve peut, par exemple, être cylindrique et le couvercle circulaire.

## Revendications

1. Abreuvoir pour animaux du type constitué en deux parties : une partie inférieure (1) constituant la cuve proprement dite et une partie supérieure (2) formant couvercle occupant toute la face supérieure de la cuve (1) et comprenant une ou plusieurs ouvertures (3) par lesquelles les animaux peuvent introduire leur museau pour boire l'eau qui se trouve dans la cuve caractérisé par le fait que les deux parties sont reliées l'une a l'autre par des moyens d'attache rapide (4) disposés autour du rebord supérieur de la cuve, de telle sorte que les deux parties puissent être facilement détachées l'une de l'autre afin de permettre le nettoyage de ces deux parties.

2. Abreuvoir selon la revendication 1, dans lequel les moyens d'attache rapide (4) sont disposés tout autour du rebord supérieur de la cuve de sorte que la partie supérieure peut être entièrement détachée de la partie inférieure.

3. Abreuvoir selon la revendication 1, dans lequel la partie supérieure (2) formant couvercle est articulée par une charnière a la partie inférieure et comporte des moyens de fermeture de sorte que le couvercle peut être pivoté pour ouvrir l'abreuvoir de façon analogue à une valise.

4. Abreuvoir selon l'une quelconque des revendications précédentes, caractérisé par le fait qu'il est isotherme.

## Claims

1. Drinker for animals, of the type consisting of two parts: a lower part (1) consisting of the actual vessel itself and an upper part (2) consisting of a cover, occupying the whole upper face of the vessel (1) and comprising one or more openings (3) through which animals can introduce their muzzles to drink the water present in the vessel, characterized in that the two parts are connected to each other by quick-release fastening means (4) located around the upper edge of the vessel, in such a way that the two parts can easily be detached from each other to permit the cleaning of these two parts.

2. Drinker according to Claim 1, in which the quick-release fastening means (4) are located around the whole of the upper edge of the vessel in such a way that the upper part can be entirely detached from the lower part.

3. Drinker according to Claim 1, in which the upper part (2) forming the cover is articulated by a hinge to the lower part and comprises closing means, in such a way that the cover can be pivoted to open the drinker in a similar way to a suitcase.

4. Drinker according to any one of the preceding claims, characterized in that it is thermally insulated.

## Patentansprüche

1. Tiertränke des Typs, der aus zwei Teilen besteht: einem unteren Teil (1), der den eigentlichen Tank bildet, und einem oberen Teil (2), der einen Deckel bildet, welcher die gesamte obere Fläche des Tanks (1) einnimmt und eine oder mehrere Öffnungen (3) umfaßt, durch welche die Tiere ihre Schnauze einführen können, um das Wasser zu trinken, das sich im Tank befindet, **dadurch gekennzeichnet,** daß die zwei Teile miteinander über Schnellbefestigungsmittel (4) verbunden sind, die so um den oberen Rand des Tanks herum angeordnet sind, daß die zwei Teile leicht voneinander gelöst werden können, um das Reinigen dieser zwei Teile zuzulassen.

2. Tränke nach Anspruch 1, bei der die Schnellbefestigungsmittel (4) rings um den oberen Rand des Tanks herum so angeordnet sind, daß der obere Teil vollständig vom unteren Teil abgenommen werden kann.

3. Tränke nach Anspruch 1, bei welcher der obere Teil (2), der den Deckel bildet, mittels eines Scharniers am unteren Teil angelenkt ist und Verschlußmittel derart aufweist, daß der Deckel verschwenkt werden kann, um die Tränke in analoger Weise wie einen Koffer zu öffnen.

4. Tränke nach einem der vorhergehenden Ansprüche, dadurch gekennzeichnet, daß sie isotherm ist.
